# EUROPEAN PATENT APPLICATION

(11) **EP 1 220 583 A1**
(43) Date of publication of application: **03.07.2002**
(21) Application number: 00250460.3
(22) Date of filing: 28.12.2000
(51) Int. Cl.: H05H 1/12

(54) **Cooling screw tubes**

(71) Applicant: Japan Atomic Energy Research Institute, Chiyoda-ku, Tokyo (JP)
(72) Inventor: Araki, Masanori, Japan Atomic Energy Res. Ins., Naka-gun, Ibaraki-ken (JP); Ezato, Koichiro, Japan Atomic Energy Res. Ins., Naka-gun, Ibaraki-ken (JP); Akiba, Masato, Japan Atomic Energy Res. Institute, Naka-gun, Ibaraki-ken (JP); Suzuki, Satoshi, Japan Atomic Energy Res. Ins., Naka-gun, Ibaraki-ken (JP)
(74) Representative: Pfenning, Meinig & Partner

(57) **Abstract**

The improved cooling screw tube for typical use with divertors in a fusion reactor has fins resembling saw-teeth formed as an internal thread in it and the shape of the internal thread is optimized to provide better heat removing capacity, reduce the pump power required to flow a cooling fluid and prevent the melting of the tube wall by detecting a sudden temperature rise at burnout.

## Description

This invention relates to screw tubes for use as cooling tubes in divertor plates that constitute the outer walls of a vessel surrounding the plasma generated in a fusion reactor, as well as in compact heat exchangers. The invention particularly relates to such screw tubes that have high heat removing capacity.

Two major design considerations in the current efforts to develop fusion reactors are size reduction and improved safety. Of particular interest here are divertors which are used within the fusion reactor to divert the particles leaking out of the plasma due to the surrounding magnetic fields and to remove heat. With a view to lowering the tritium retention in the reactor, the surface of the tungsten armor of the divertor is made more resistant to elevated temperatures. At the same time, the structure of the divertor is made less complex in order to reduce the cost.

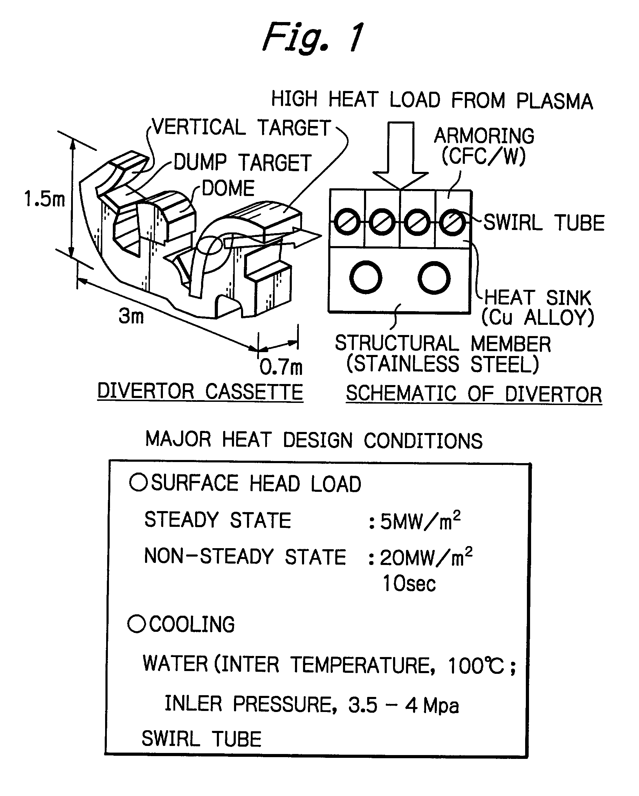

A divertor cassette is shown in Fig. 1 and consists of a vertical target, a dump target and a dome. The vertical target consists of tungsten and carbon-fiber-reinforced carbon composite(CFC) armors and a stainless steel structural member, with the armoring being cooled with swirl tubes.

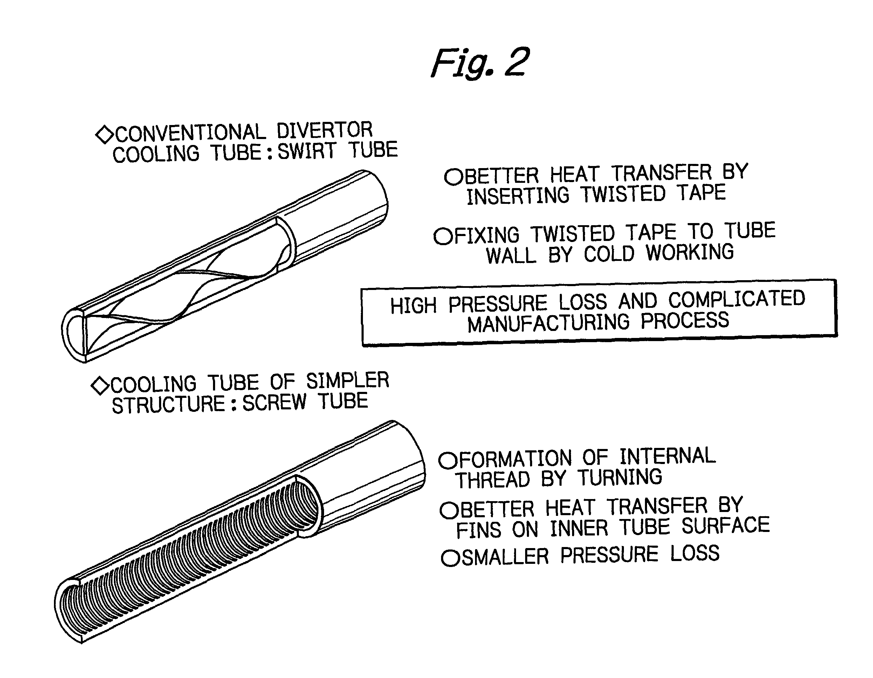

As shown in Fig. 2, a conventional swirl tube has a twisted tape inserted in it to form a cooling swirl flow. However, this design has had many problems to solve. For example, in order to prevent it from vibrating and dislodging, the inserted twisted tape has to be fixed to the inner surface of the tube by cold working and other complicated processes. In addition, considerable pressure loss occurs.

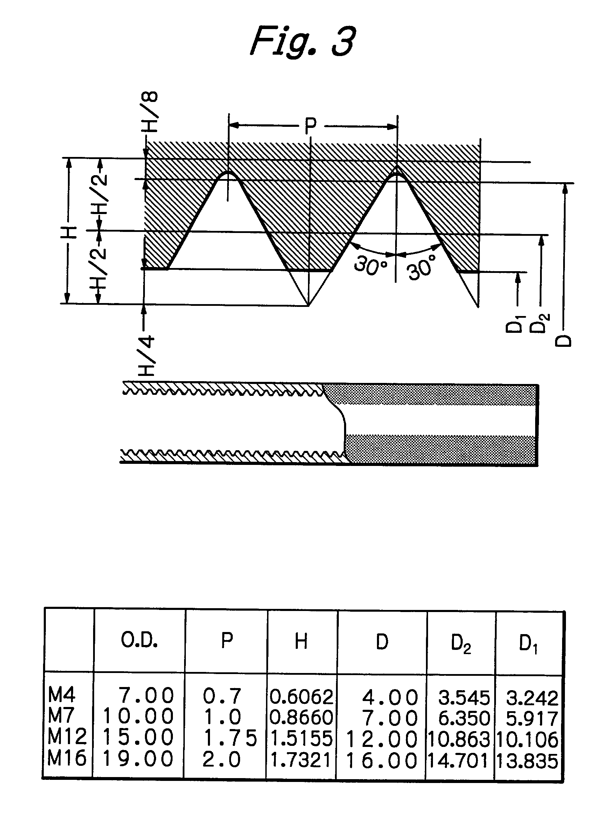

One of the ideas proposed for simpler divertor cooling tube construction is a screw tube of the type shown in the lower part of Fig. 2. A screw tube has undulations formed on its inner surface by a turning process to achieve accelerated heat transfer. As another advantage, the major stream of a coolant flows straight through the tube to cause smaller pressure loss. The screw tube has an inner surface structure as shown in Fig. 3 and sample tubes complying with the ISO-261 standard, M4 (P = 0.7), M7 (P = 1.0), M12 (P = 1.75) and M16 (P = 2.0), were developed by three of the co-inventors of the subject application and published in FUSION TECHNOLOGY, Vol. 29, July 1966, pp. 519-528.

These screw tube samples are superior to the swirl tube in terms of pressure loss. However, a demand has recently arisen to further improve their heat removing capacity.

The present invention has been accomplished in order to meet this need and its object is to provide screw tubes for use as cooling tubes in divertor plates that constitute the outer walls of a vessel surrounding the plasma generated in a fusion reactor, as well as in compact heat exchangers. The invention particularly aims at providing such screw tubes that have high heat removing capacity.

If the cooling screw tube of the invention is a copper tube having an outside diameter of 14 mm, the shape of its inner surface can be optimized by forming an internal thread in accordance with the ISO-216 standard M10 such that the pitch P is 0.75 - 1.75 mm, the distance ID1 between diametrically opposite crests is 8.1 - 9.2 mm and the distance h between a crest and an adjacent root is 0.41 - 0.95 mm.
Fig. 1 shows the structure of a divertor in a fusion reactor;
Fig. 2 shows screw tube vs. swirl tube as a divertor cooling tube;
Fig. 3 shows the inner wall structure of a screw tube together with the major dimensions of samples based on the ISO-261 standard, M4, M7, M12 and M16;
Fig. 4 shows the inner wall structure of a screw tube together with the major dimensions of samples based on the ISO-261 standard M10;
Fig. 5 shows the dependency of critical heat flux on the pitch of a thread;
Fig. 6 shows how the shape of teeth on the inner surface of a screw tube affects critical heat flux;
Fig. 7 shows how burnout is detected with thermocouples and what response they make;
Fig. 8 is a graph showing the power of a pump as related to the critical heat flux through various types of cooling tubes; and
Fig. 9 is a graph showing the relationship between axial flow velocity and pressure drop for various types of cooling tubes.

Fig. 3 shows the shape of the internal thread formed in a screw tube together with the major dimensions of four samples complying with the ISO-261 (ISO general-purpose screw thread-general plan) standard, M4, M7, M12 and M16. Take, for example, the sample of M4; its outside diameter is 7.00 mm, the pitch P of the thread is 0.7 mm, the height H of the pitch is 0.6062 mm, the distance D between diametrically opposite roots is 4.00 mm, the distance D₁ between diametrically opposite crests is 3.242 mm, and the distance D₂ between diametrically opposite midpoints is 3.545 mm.

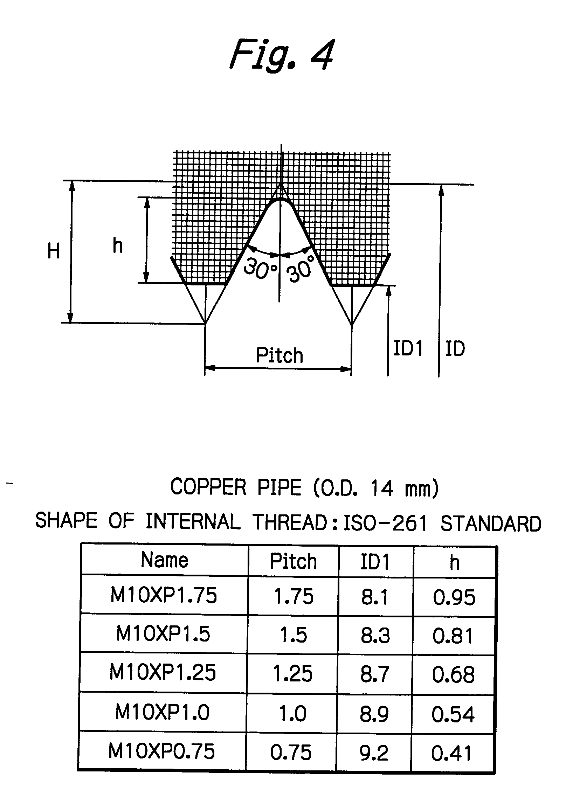

Fig. 4 shows the shape of the internal thread formed in the screw tube of the invention. Being made of copper, the screw tube has an outside diameter of 14 mm and its internal thread is formed by a turning process in accordance with the ISO-26 standard M10 such that the pitch P of the thread is 1.75 mm, 1.5 mm, 1.25 mm, 1.0 mm or 0.75 mm, the distance D₁ between diametrically opposite crests is respectively 8.1 mm, 8.3 mm, 8.7 mm, 8.9 mm or 9.2 mm and the distance h between a crest and an adjacent root being respectively 0.95 mm, 0.81 mm, 0.68 mm, 0.54 mm or 0.41 mm. By selecting these dimensional values, the shape of the internal thread can be optimized.

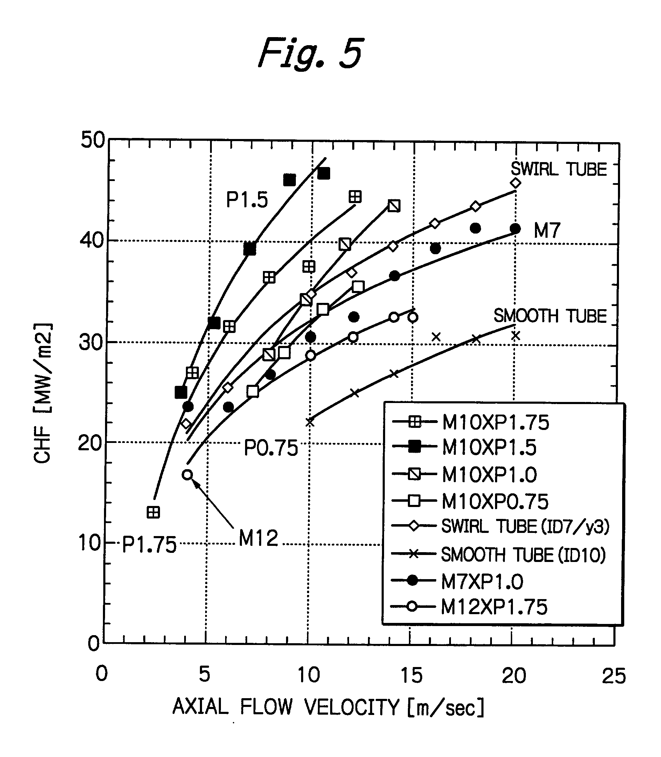

These five samples of the screw tube of the invention were compared with the swirl tube and the smooth tube for the pitch dependency of the critical heat flux (CHF) of a cooling fluid flow through each tube. The results are shown in Fig. 5, from which one can see that the screw tube samples of M10 x P 1.5 and M10 x P 1.75 produced satisfactory CHF values, with the highest value being obtained at P of 1.5 mm.

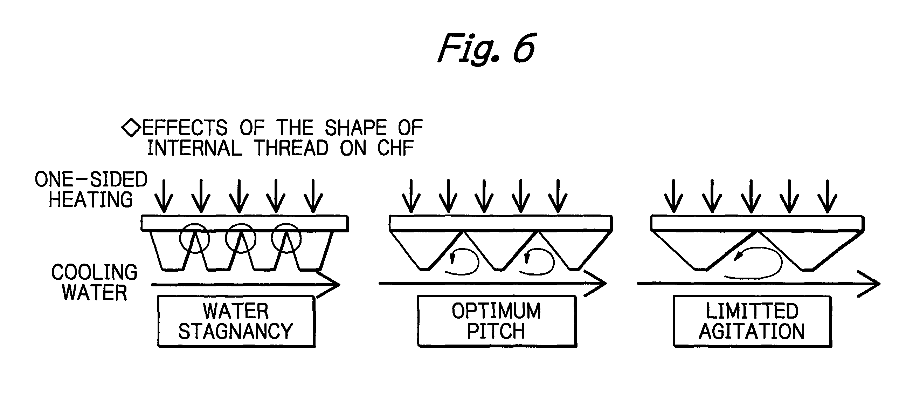

CHF is the heat flux on the outer surface of a cooling tube and may be defined as the heat flux that passes on a heat transfer surface at a transition from nucleate boiling to film boiling. Fig. 6 shows how the shape of teeth on the inner surface of a screw tube affects CHF. Part of the cooling water gets into the thread grooves and depending on the pitch of the internal thread, the water becomes stagnant or produces optimum agitation or provides only limited agitation.

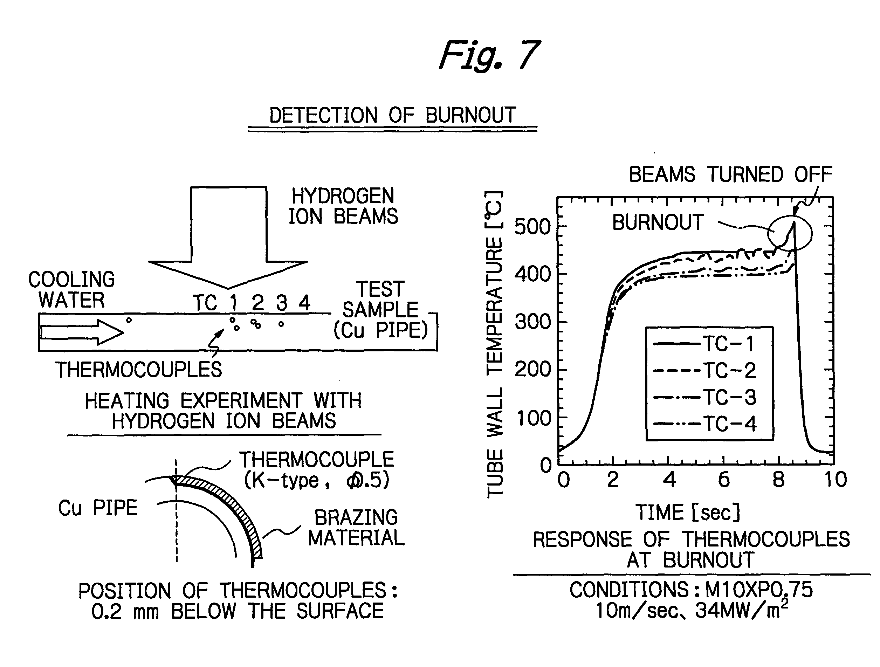

Fig. 7 shows the method of CHF detection. As shown, cooling water was flowed through a copper pipe, with thermocouples TC-1, 2, 3 and 4 being buried in the outer wall of the pipe to record their response at burnout due to a transition from nucleate boiling to film boiling (if this transition occurs, the heat transfer surface is covered with a vapor film, so the heat transfer rate drops suddenly to cause melting of the copper pipe, which is called "burnout"). The sudden temperature rise that occurred as a result of the burnout at about 500°C could be detected with thermocouples TC-1, 2, 3 and 4 and subsequent melting of the pipe wall could be prevented by turning off the hydrogen ion beams.

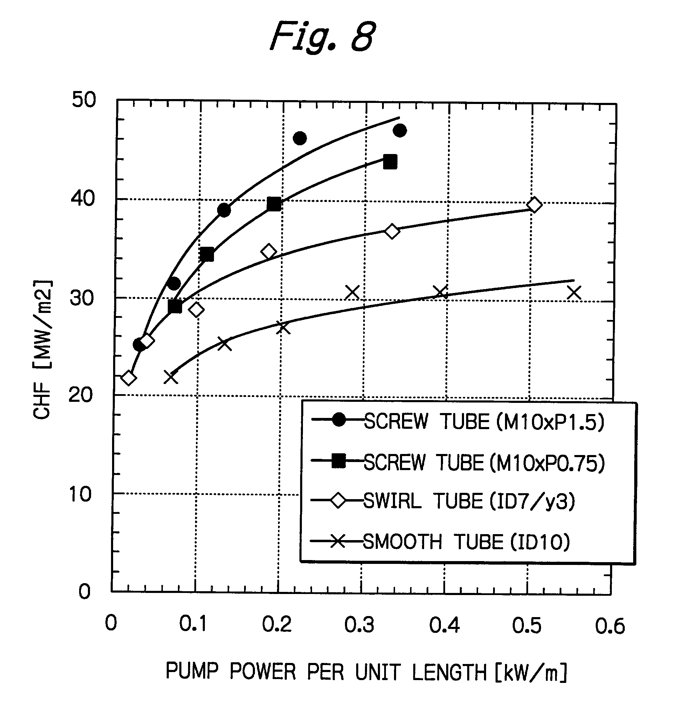

Fig. 8 is a graph showing the relationship between CHF and the power of a pump for causing a cooling fluid to flow through various types of cooling tubes. The pump power required by the screw tube samples of the invention to produce a CHF value comparable to the swirl tube was as much as 40% less. In other words, compared at the same flow velocity of cooling water, the screw tube samples of the invention can produce higher values of CHF than screw tubes of other internal thread shapes. Conversely, the flow velocity of cooling water that is required to obtain the same CHF value can be reduced by using the screw tube of the invention having internal threads in accordance with ISO-261 M10.

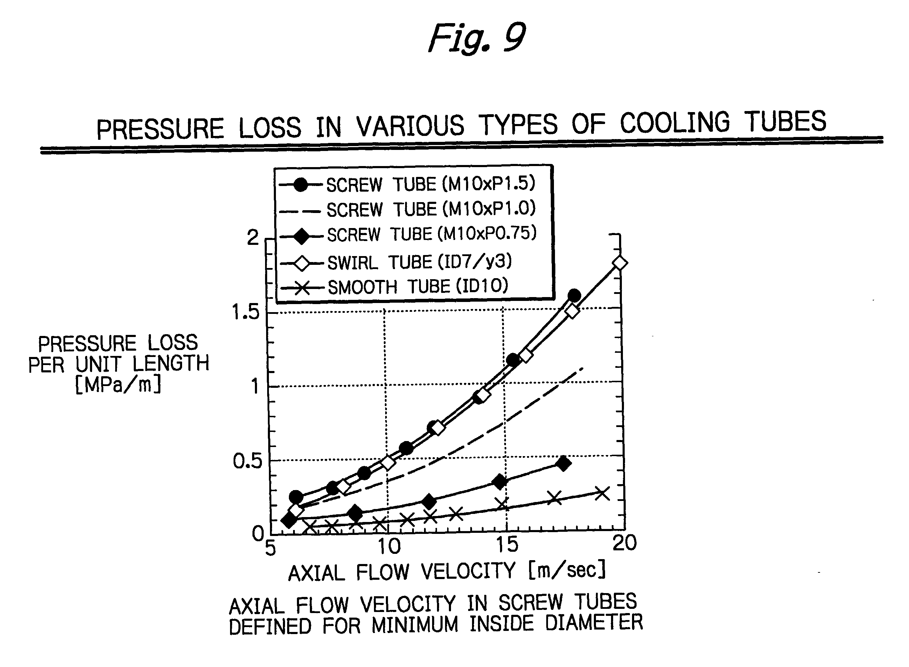

The 40% reduction in pump power can be confirmed by comparing the two types of cooling tube at CHF levels of 40 MW/m² and 30 MW/m²; at the first level, the swirl tube required a pump power of about 0.5 kW/m whereas the screw tube of M10 x P 1.5 required about 0.13 kW/m; at the second level, the swirl tube required a pump power of about 0.1 kW/m whereas the screw tube of M10 x P 1.5 required about 0.06 kW/m. Since the CHF design value for cooling the divertors in the ITER (International Thermonuclear Experimental Reactor) is about 30 MW/m², about 40% reduction in pump power is anticipated by operating the screw tube of the invention in this range. Pressure loss provides a basis for pump power calculations and Fig. 9 shows the results of pressure loss measurements on various types of cooling tubes.

The screw tube of the invention is made of oxygen-free copper and to provide the best cooling performance, it should have a thread pitch of 1.5 mm under ISO-261 M10.

The following examples are provided for further illustrating the present invention.

### Example 1

The cooling screw tube used in Example 1 was made of oxygen-free copper, had an outside diameter of 14 mm and had an internal thread formed over the entire length (490 mm) in accordance with the ISO-261 standard, M10. Burnout was detected by temperature response of four thermocouples (0.5 mm^{φ}) buried in the outer wall of the tube. The screw tube was positioned level in a vacuum chamber and heated from one side with hydrogen ion beams. Cooling water was flowed through the tube at a velocity of 4 - 14 m/sec with an inlet temperature of 20 - 25°C at a pressure of 1 MPa. Fig. 8 shows CHF as related to pump power which is defined by pressure loss per unit length and volumetric flow rate. For comparison, Fig. 8 also shows the results of using the swirl tube (i.d., 7 mm; tape twist ratio y, 3) and the smooth tube (i.d., 10 mm).

As Fig. 8 shows the pump power required by the screw tube of M10 to produce CHF of 40 MW/m² was no more than 40% of the value required by the conventional swirl tube. The velocity of the cooling water flowing through each tube was 10 m/sec, provided that the flow velocity in the screw tube was defined for minimum inside diameter which was the distance between diametrically opposite crests of the internal thread. Due to the lower pressure loss, the screw tube of the invention could achieve more efficient heat removal with less pump power.

### Example 2

The cooling screw tubes used in Example 2 were made of oxygen-free copper, had an outside diameter of 14 mm and had an internal thread formed over the entire length (490 mm) in accordance with the ISO-261 standard M10 to produce thread pitches of 0.75 mm, 1.0 mm and 1.5 mm. Burnout was detected by temperature response of four thermocouples (0.5 mm^{φ}) buried in the outer wall of the tube. The screw tubes were positioned level in a vacuum chamber and heated from one side with hydrogen ion beams. Cooling water was flowed through the tube at a velocity of 4 - 14 m/sec with an inlet temperature of 20 - 25°C at a pressure of 1 MPa. Fig. 8 shows CHF as related to pump power which is defined by pressure loss per unit length and volumetric flow rate.

As Fig. 8 shows the pump power required by the screw tube of M10 to produce CHF of 40 MW/m² was no more than 40% of the values required by the conventional screw tubes M7 and M12. The velocity of the cooling water flowing through the screw tube was 10 m/sec. Thus, due to the lower pressure loss than what accompanied the conventional screw tubes (M7 and M12), the screw tube M10 of the invention could achieve more efficient heat removal with less pump power.

In short, by optimizing the internal thread pitch-to 1.5 mm, the screw tube of the invention which complied with the ISO-261 standard M10 could produce the highest critical heat flux. For instance, given cooling water flowing at a velocity of 10 m/sec with an inlet temperature of 20 - 25°C at a pressure of 1 MPa, the critical heat flux was 48 MW/m² which was 1.4 times as high as the value achieved by the swirl tube.

Conversely, the pump power required by the screw tube M10 to produce a critical heat flux value comparable to that achieved by the swirl tube was 40% or less. Therefore, the screw tube of the invention contributes to constructing less complex divertors in fusion reactors at lower cost.

## Claims

1. A cooling screw tube having fins resembling saw-teeth formed as an internal thread in it, the shape of said internal thread being optimized to provide better heat removing capacity, reduce the pump power required to flow a cooling fluid and prevent the melting of the tube wall by detecting a sudden temperature rise at burnout.

2. The cooling screw tube according to claim 1, which is a copper tube having an outside diameter of 14 mm, with the shape of its inner surface being optimized by forming an internal thread in accordance with the ISO-216 standard M10 such that the pitch P is 0.75 - 1.75 mm, the distance ID1 between diametrically opposite crests is 8.1 - 9.2 mm and the distance h between a crest and an adjacent root is 0.41 - 0.95 mm.
